(19) Europäisches Patentamt
European Patent Office
Office européen des brevets

(11) Veröffentlichungsnummer: **0 186 627**
**B1**

(12) # EUROPÄISCHE PATENTSCHRIFT

(45) Veröffentlichungstag der Patentschrift: **23.01.91**

(51) Int. Cl.⁵: **C 07 C 211/52,** C 07 C 209/60

(21) Anmeldenummer: **85810599.2**

(22) Anmeldetag: **16.12.85**

(54) **Orthonitroaniline und ein Verfahren zu deren Herstellung.**

(30) Priorität: **20.12.84 GB 8432187**

(43) Veröffentlichungstag der Anmeldung:
**02.07.86 Patentblatt 86/27**

(45) Bekanntmachung des Hinweises auf die Patenterteilung:
**23.01.91 Patentblatt 91/04**

(84) Benannte Vertragsstaaten:
**BE CH DE FR GB IT LI NL**

(56) Entgegenhaltungen:
**US-A-3 780 046**

**JOURNAL OF THE CHEMICAL SOCIETY, Teil II, 1935, Seite 1875, London, GB; W.A. WATERS "3-Nitro-4-aminodiphenylmethane and its derivatives"**

**Die Akte enthält technische Angaben, die nach dem Eingang der Anmeldung eingereicht wurden und die nicht in dieser Patentschrift enthalten sind.**

(73) Patentinhaber: **CIBA-GEIGY AG**
**Klybeckstrasse 141**
**CH-4002 Basel (CH)**

(72) Erfinder: **Howell, Frederick Harold, Dr.**
**27 High Bank Atherton**
**Lancashire M29 9HZ (GB)**

**EP 0 186 627 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Courier Press, Leamington Spa, England.

**Beschreibung**

Die vorliegende Erfindung betifft neue Orthonitroaniline und ein Verfahren zu deren Herstellung.

Im U.S. Patent 3 780 046 sind in Tabelle II 6-Benzyl-2-ethyl- und 6-Benzyl-2-n-propyl-orthonitroaniline und ihre Verwendung als Herbizide offenbart.

Die Erfindung betrifft Orthonitroaniline der Formel I

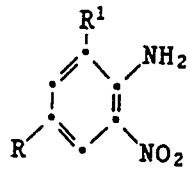

(I),

worin

R und $R^1$ unabhängig voneinander H, Halogen, lineares oder verzweigtes Alkyl mit 1 bis 8 C-Atomen oder einen Rest der Formel II bedeuten,

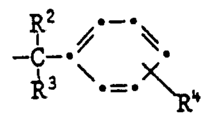

(II),

worin $R^2$ und $R^3$ gleich oder verschieden sind und lineares oder verzweigtes Alkyl mit 1 bis 4 C-Atomen darstellen, und $R^4$ H, Halogen oder lineares oder verzweigtes Alkyl mit 1 bis 4 C-Atomen ist, mit der Massgabe, dass mindestens eines der beiden Symbole R und $R^1$ ein Rest der Formel II darstellt.

Bei R und $R^1$ als $C_1$—$C_8$-Alkyl kann es sich zum Beispiel um Methyl, Ethyl, n-Propyl, iso-Propyl, n-Butyl, iso-Butyl, t-Butyl, t-Pentyl oder 1,1,3,3-Tetramethylbutyl handeln.

R, $R^1$ oder $R^4$ können als Halogen zum Beispiel Fluor, Brom oder Jod und besonders Chlor sein.

$R^2$, $R^3$ oder $R^4$ können als $C_1$—$C_4$-Alkyl zum Beispiel Methyl, Ethyl, n-Propyl, iso-Propyl, n-Butyl oder t-Butyl sein.

Besonders bevorzugt sind Verbindungen der Formel I, worin R einen Rest der Formel II und $R^1$ H bedeuten. Eine besondere Ausführungsform der Erfindung sind Verbindungen der Formel I, worin $R^1$ H ist, R ein Rest der Formel II darstellt, worin $R^2$ und $R^3$ Methyl bedeuten, und $R^4$ für H oder $C_1$—$C_4$-Alkyl, besonders H oder Methyl, steht.

Die Gruppe $R^4$ ist bevorzugt in Parastellung zur —$CR^2R^3$-Gruppe im Rest der Formel II gebunden. Eine besonders bevorzugte Verbindung der Formel I ist 4-Cumyl-2-nitroanilin.

Beispiele für Verbindungen der Formel I sind: 4-Cumyl-2-nitroanilin, 4-(4-iso-Propyl-α,α-dimethyl-benzyl)-2-nitroanilin, 4-(4-Chloro-α,α-di-methyl-benzyl)-2-nitroanilin, 4-Cumyl-6-methyl-2-nitroanilin, 6-Methyl-4-(4-isopropyl-α,α-di-methyl-benzyl)-2-nitroanilin, 4-(4-Chloro-α,α-dimethyl-benzyl)-6-methyl-2-nitroanilin.

Die Verbindungen der Formel I können nach an sich bekannten Aralkylierungsverfahren hergestellt werden. Zum Beispiel kann ein Orthonitroanilin bei erhöhten Temperaturen und in Gegenwart eines wässrigen Säurekatalysators mit einem Aralkylierungsmittel umgesetzt werden, so dass ein oder zwei Reste der Formel II in das Orthonitroanilin eingeführt werden. Die Reaktionsbedingungen werden so gewählt, dass der gewünschte Aralkylierungsgrad erzielt wird.

Zum Beispiel können die Verbindungen der Formel I hergestellt werden, indem man 1 Mol eine Orthonitroanilines der Formel III

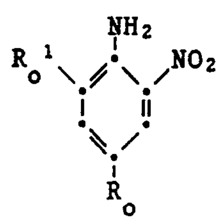

(III),

worin $R_o$ und $R_o^1$ entweder beide für Wasserstoff oder eines von beiden für Wasserstoff und das andere für lineares oder verzweigtes $C_1$—$C_8$-Alkyl oder Halogen stehen, mit bis zu einem Mol oder mindestens zwei Mol eines Aralkylierungsmittels, das einen Rest der zuvor definierten Formel II in den Benzolring in der Formel III in ortho- oder und Parastellung zur Aminogruppe einzuführen vermag, umsetzt.

Die Aralkylierung kann auch dergestalt in einem Zweistufenverfahren durchgeführt werden, dass zunächst ein Rest der Formel II und danach ein gleicher oder verschiedener Rest der Formel II eingeführt wird. In der zweiten Stufe können also Verbindungen der Formel I hergestellt werden durch die Reaktion von 1 Mol eines Orthonitroanilins der Formel III, worin eines von $R_o$ und $R_o^1$ H ist und dass andere für einen Rest der Formel II steht, mit mindestens 1 Mol eines wie zuvor definierten Aralkylierungsmittels.

Die Aralkylierung wird vorteilhaft bei erhöhten Temperaturen in Gegenwart eines wässrig-sauren Reaktionsmediums durchgeführt, das im allgemeinen mindestens 30 Gew.-% Wasser, bezogen auf die verwendet Säure enthält. Das molare Verhältnis von Orthonitroanilin der Formel III zum Aralkylierungsmittel kann von 10:1 bis 1:3 betragen.

Wenn ein Ueberschuss an Orthonitroanilin der Formel III benutzt wird, ist eine Rückgewinnung durch z.B. Destillation und dessen Wiederverwendung möglich.

Durch die Gegenwart einer wesentlichen Menge Wasser, bezogen auf die Säure, wird erreicht, dass die Reaktionsmischung eine homogene Lösung bildet. Vorteilhaft wird als Säure käufliche konzentrierte Salzsäure (36%-ig) eingesetzt, wobei die Menge an Wasser, bezogen auf Salzsäure, dann 64 Gewichtsprozent beträgt.

Die Aralkylierung im wässrigen Reaktionsmedium wird bevorzugt in Gegenwart eines Metallsalzes als Cokatalysator und unter Normaldruck durchgeführt, gegebenenfalls in Gegenwart eines inerten organischen Lösungsmittels, bevorzugt Essigsäure.

Das Aralkylierungsmittel enthält als reaktive Gruppen z.B. eine olefinische, Hydroxy-, Amino-, Halogen-, Acetoxy- oder Ethergruppe, die im Verlauf der Reaktion eliminiert, umgeordnet oder umgelagert wird.

Die Aralkylierung wird bevorzugt bei einer Temperatur von 50 bis 200°C, besonders 100 bis 150°C, durchgeführt. Bei Temperaturen oberhalb etwa 110°C kann vorteilhaft Ueberdruck angewendet werden, bevorzugt ein Ueberdruck unter 100 bar.

Der verwendete saure Katalysator kann eine ein- oder mehrbasische, anorganische oder organische Säure sein, die auch teilweise versalzt sein kann. Beispiele sind: Salz-, Schwefel- und Orthophosphorsäure; Alkyl-, Aryl- und Alkarylsubstituierte Säuren, z.B. Methyl- oder Ethylsulfonsäure, Phenylsulfonsäure, p-Toluolsulfonsäure, Methylphosphonsäure, Dichloressigsäure, Trichloressigsäure, Trifluoressigsäure oder perfluorierte Sulfonsäureharze, z.B. Nafion® H (Dupont). Der molare Anteil des Säurekatalysators im Reaktionsgemisch beträgt bevorzugt 0.25 bis 1 Mol pro Mol Orthonitroanilin der Formel III.

Die Aralkylierung wird vorteilhaft in Gegenwart eines Cokatalysators durchgeführt. Dieser kann ein Metallsalz, -oxid, -hydroxid oder -carbonat sein, wobei das Metall aus der zweiten Haupt- und Nebengruppe oder der dritten und achten Hauptgruppe des Perioden systems der Elemente ausgewählt ist. Solche Metalle sind z.B. Mg, Cd, Zn, Al, Fe, Co oder Ni. Das Metallsalz kann ein Halogenid, Sulfat oder Phosphat sein. Wenn ein Metallcarbonat, -oxid oder -hydroxid verwendet wird, wird ein ausreichender Ueberschuss an Säurekatalysator eingesetzt, um eine Umwandlung in die entsprechenden Metallsalze zu bewirken.

Die Menge des Metallsalzes beträgt vorteilhaft bis zu 0.5 Mol pro Mol Orthonitroanilin. Ein geeigneter Cokatalysator ist zum Beispiel $ZnCl_2$.

Nach der Beendigung der Reaktion kann das aralkylierte Orthonitroanilin durch Behandlung mit einer Base, z.B. Alkalimetallhydroxiden, -carbonaten oder -bicarbonaten oder Ammoniumhydroxid, von der Säure und Metallsalzen getrennt werden.

Beispiele für Orthonitroaniline der Formel III sind: 2-Nitroanilin, 4-Methyl-2-nitroanilin, 6-Methyl-2-nitroanilin, 4-Ethyl-2-nitroanilin, 4-n-Propyl-2-nitroanilin, 4-iso-Propyl-2-nitroanilin, 4-n-Butyl-2-nitroanilin, 4-sec-Butyl-2-nitroanilin, 4-t-Butyl-2-nitroanilin, 4-n-Octyl-2-nitroanilin, 4-(1,1,3,3-Tetramethyl-butyl)-2-nitroanilin, 4-Chloro-2-nitroanilin, 6-Chloro-2-nitroanilin.

Das Aralkylierungsmittel kann ein arylsubstituertes Olefin, ein Aralkylalkohol, ein Aralkylether, ein Aralkylamin, ein Aralkylhalogenid oder ein Aralkylacetat sein, welche befähigt sind, einen Rest der Formel II in den Benzolkern des Orthonitroanilins der Formel III einzuführen.

In einer anderen Ausführungsform kann die Aralkylierung in Gegenwart eines sauren Katalysators in einem nichtwässrigen Reaktionsmedium durchgeführt werden z.B. in der Schmelzphase oder in Gegenwart eines inerten organischen Lösungsmittels, bevorzugt Essigsäure. Auch bei diesen Reaktionsbedingungen werden vorteilhaft erhöhte Temperaturen im Bereich von 100 bis 200°C, bevorzugt 150—175°C.

Beispiele für Aralkylierungsmittel sind: α-Methylstyrol, Cumylalkohol, Cumylacetat, 4-Chloro-α-methylstyrol, 4-Chlorocumylalkohol, 4-iso-Propyl-α-methylstyrol oder Mischungen davon.

Die Verbindungen der Formel I sind wertvolle Zwischenprodukte, besonders zur Herstellung von Dispersionsfarbstoffen, die ihrerseits zum Färben von Polyesterfasern geeignet sind. Die Farbstoffe können der Formel

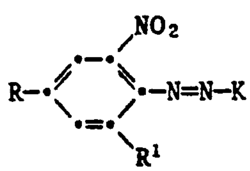

entsprechen, worin R und $R^1$ die zuvor angegbene Bedeutung haben und K für eine carbocyclische und besonders heterocyclische Kupplungskomponente, insbesondere für ein Pyridon, steht.

Die Farbstoff können nach üblichen Verfahren durch Diazotisierung der Verbindungen der Formel I und anschliessendes Kuppeln mit der Kupplungskomponente hergestellt werden.

Die nachfolgenden Beispiele erläutern die Erfindung näher. Wenn nicht anders angegeben, sind Teile Gewichtsteile und Prozentangaben Gewichtsprozent.

Beispiel 1

Zu 20,4 Teilen konzentrierter Salzsäure (36%-ig), in der 13,4 Teile wasserfreies Zinkchlorid gelöst sind, werden 27,6 Teile Orthonitroanilin gegeben. Die Mischung wird zum Rückfluss erwärmt und innerhalb einer Stunde 23,6 Teile α-Methylstyrol tropfenweise zugegeben, wobei die Mischung gerührt wird. Danach wird die Reaktionsmischung 2 Stunden unter Rückfluss weiter gerührt. Darauf giesst man die noch heisse Reaktionsmischung in eine Lösung aus 50 Teilen NaOH in 100 Teilen Wasser. Nach 15 Minuten Rühren lässt man abkühlen, wobei sich die organische Phase verfestigt. Die feste Phase wird zerkleinert, abfiltriert mit Wasser gewaschen und getrocknet. Nach dem Umkristallisieren aus Ethanol erhält man 4-Cumyl-2-nitroanilin als orange Kristalle mit einem Schmelzpunkt von 92—94°C.

| Elementaranalyse | Kohlenstoff | Wasserstoff | Stickstoff |
|---|---|---|---|
| Gefunden | 70,17 | 6.46 | 10,81 |
| Berechnet für $C_{15}H_{16}N_2O_2$ | 70,29 | 6,29 | 10,93 |

Beispiele 2 bis 4

Die in nachfolgender Tabelle aufgeführten Verbindungen werden nach dem Verfahren gemäss Beispiel 1 hergestellt. Es werden 20,4 Teile 36%-ige Salzsäure und 13,6 Teile Zinkchlorid verwendet.

Tabelle 1

| Beispiel | Ausgangsverbindungen Verfahrensbedingungen | Verbindung der Formel I | Siedepunkt (°C) | Schmelzpunkt (°C) | Elementaranlyse (% gefunden und berechnet) | | |
|---|---|---|---|---|---|---|---|
| | | | | | C | H | N |
| 2 | 27,6 Teile Orthonitroanilin, 9,2 Teile p-Isopropenyl-isopropylbenzol, 6 Stunden Rückfluss | 4-(4-Isopropyl)-α,α-dimethylbenzyl)-2-nitroanilin | 220<br>0,5 mbar | 109-11 | 72,86<br>72,45 | 7,48<br>7,43 | 9,36<br>9,39 |
| 3 | 27,6 Teile Orthonitroanilin, 30.5 Teile 4-Chlor-α-methylstyrol 3 Stunden Rückfluss | 4-(4-Chloro-α,α-dimethyl-benzyl)-2-nitroanilin | 212<br>0,5 mbar | 83-5 | 62,08<br>61,96 | 5,29<br>5,20 | 9,67<br>9,64 |
| 4 | 30,4 Teile 6-Methyl-2-nitroanilin, 23,6 Teile α-Methylstyrol, 20 Stunden Rückfluss | 6-Methyl-4-(α,α-dimethyl-benzyl)-2-nitroanilin | | 119.21 | 70,75<br>71,09 | 6,73<br>6,71 | 9,95<br>10,36 |

Beispiel 5 (Anwendungsbeispiel)

12,8 Teile 4-Cumyl-2-nitroanilin (hergestellt gemäss Beispiel 1) werden in einer Mischung aus 85 Volumenteilen Essigsäure und 15 Volumenteilen Propionsäure gelöst. Die Lösung wird mit 12,5 Volumenteilen 32%-iger Salzsäure versetzt, auf 0°C gekühlt, und mit 12,5 Volumenteilen 4N Natriumnitritlösung diazotiert (Zugabezeit 10 Minuten bei 0—5°C) und für 45 Minuten bei 0—5°C gerührt. Die Diazoniumsalzlösung wird dann während 20 Minuten in eine Lösung von 9,4 Teilen Pyridon der Formel

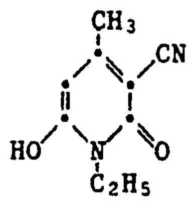

in 200 Volumenteilen Wasser und 5 Volumenteilen 30 %-iger NaOH getropft, wobei die Temperatur bei 0—10°C und der pH Wert 4 gehalten wird (mit wässrigem Ammoniak). Nach weiterem einstündigem Rühren bei höchstens 10°C wird der Farbstoff abgetrennt und durch Waschen mit verdünntem Ammoniak vom überschüssigen Kuppler befreit, mit Wasser neutral gewaschen und bei 80°C im Vakuum getrocknet. Man erhält 20,7 Teile (93% der Theorie) eines Farbstoffes der Formel

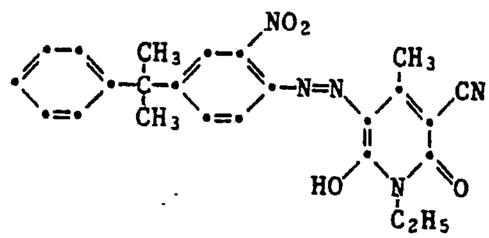

als orange-gelbes Pulver, das nach Sintern bei 180°C zwischen 213 und 216°C schmilzt.

Nach zweimaligem Umkristallisieren aus Ethylacetat beträgt der Schmelzpunkt 221—222°C (Sintern bei 216°C).

Beispiel 6

Zu 510 Teilen Salzsäure (36 %-ig), die 170 Teile wasserfreies Zinkchlorid enthält, werden 690 Teile Orthonitroanilin gegeben. Diese Mischung wird zum Ruckfluss erhitzt und während einer Stunde unter Rühren 708 Teile α-Methylstyrol zugegeben. Darauf wird die Reaktionsmischung anderthalb Stunden am Rückfluss gerührt und dann die heiss Mischung in eine Lösung von 600 g NaOH in 1400 Teilen Wasser gegossen. Es wird bis zum Kühlen gerührt und danach 1500 Teile Diethylether zugegeben und zur Entfernung von geringen Anteilen Feststoffen durch ein Faserfilter filtriert. Die organische Phase wird in einem Scheidetrichter abgetrennt, zweimal mit 500 Teilen Wasser gewaschen, über Magnesiumsulfat getrocknet, mit Aktiokohle behandelt und dann filtriert. Das Filtrat wird im Wasserbad konzentriert, bis das Gewicht etwa 2000 teile beträgt. Dann wird mit 2000 Teilen Petrolether (40/60) verdünnt und über Nacht stehen gelassen. Die gebildeten Kristalle werden abfiltriert, erneut in Petrolether (40/60) suspendiert, 1 Stunde gerührt und dann filtriert. Man erhält 4-Cumyl-2-nitroanilin als orange Kristalle mit einem Schmelzpunkt von 92—93°C und einer Reinheit von 100% (gemäss Flüssigkeitschromatographie-Analyse).

Beispiel 7

13,8 Teile 2-Nitroanilin, 14,2 Teile α-Methylstyrol, 10,2 Teile Salzsäure (36%-ig), 25 Teile Wasser und 30 Teile Eisessig werden 8 Stunden am Rückfluss erhitzt und dann in einen Ueberschuss von 10%-iger NaOH-Lösung gegossen. Die organische Phase wird in Ether aufgenommen, abgetrennt, der Ether abdestilliert und dann fraktioniert. Man erhält ein Destillat, des bei 190—210°C/1,5 mbar siedet und das 86,4% 4-Cumyl-2-nitroanilin enthält (bestimmt durch Flüssigkeitschromatographie).

Beispiel 8

55,2 Teile Orthonitroanilin, 28,3 Teile α-Methylstyrol und 3,8 Teile p-Toluolsulfonsäuremonohydrat werden unter Rühren auf 175°C erwärmt und dann während 15 Minuten 28,3 Teile α-Methylstyrol zugetropft. Dann wird 30 Minuten lang bei 175°C gerührt. Die Reaktionsmischung wird abgekühlt und mit 200 Teilen 1N NaOH behandelt. Die organische Phase wird mit Diethylether abgetrennt und danach destilliert. Man erhält ein Destillat, das bei 200—210°C/0,5 mbar siedet und 97,5% 4-Cumyl-2-nitroanilin enthält (bestimmt durch Chromatographie).

**Patentansprüche**

1. Verbindungen der Formel I

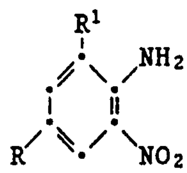

(I),

worin

R und $R^1$ unabhängig voneinander H, Halogen, lineares oder verzweigtes Alkyl mit 1 bis 8 C-Atomen oder einen Rest der Formel II bedeuten,

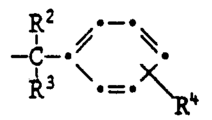

(II),

worin $R^2$ und $R^3$ gleich oder verschieden sind und lineares oder verzweigtes Alkyl mit 1 bis 4 C-Atomen darstellen, und $R^4$ H, Halogen oder lineares oder verzweigtes Alkyl mit 1 bis 4 C-Atomen ist, mit der Massgabe, dass mindestens eines der beiden Symbole R und $R^1$ einen Rest der Formel II darstellt.

2. Verbindungen der Formel I gemäss Anspruch 1, worin R und $R^1$ wie in Anspruch 1 definiert sind, mit der Massgabe, dass eines von R und $R^1$ ein Rest der Formel II ist.

3. Verbindungen gemäss Anspruch 1, worin R ein Rest der Formel II und $R^1$ Wasserstoff ist.

4. Verbindung gemäss Anspruch 1, worin $R^1$ H ist und R für einen Rest der Formel II steht, worin $R^2$ und $R^3$ Methyl sind und $R^4$ für H oder $C_1$—$C_4$-Alkyl steht.

5. Verbindung gemäss Anspruch 4, worin $R^4$ für H oder Methyl steht.

6. Verbindungen gemäss Anspruch 1, worin $R^4$ in Parastellung zur —$CR^2R^3$-Gruppe gebunden ist.

7. 4-Cumyl-2-nitroanilin gemäss Anspruch 1.

8. Verfahren zur Herstellung von Verbindungen der Formel I gemäss Anspruch 1, dadurch gekennzeichnet, dass man 1 Mol eines Orthonitroanilins der Formel III

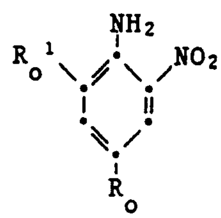

(III),

worin $R_o$ und $R_o^1$ entweder beide für Wasserstoff oder eines von beiden für Wasserstoff und das andere für lineares oder verzweigtes $C_1$—$C_8$-Alkyl oder Halogen stehen, mit bis zu einem Mol oder mindestens zwei Mol eines Aralkylierungsmittels, das einen Rest der in Anspruch 1 definierten Formel II in den Benzolring in der Formel III in ortho- oder/und Parastellung zur Aminogruppe einzuführen vermag, umsetzt.

**Revendications**

1. Composés répondant à la formule I:

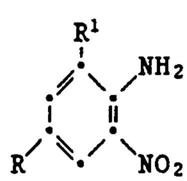

(I),

dans laquelle R et $R^1$ représentent chacun, indépendamment l'un de l'autre, l'hydrogène, un halogène, un alkyle linéaire ou ramifié qui contient de 1 à 8 atomes de carbone, ou un radical répondant à la formule II:

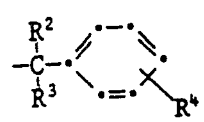

(II),

dans laquelle $R^2$ et $R^3$, qui peuvent être identiques ou différents, représentent chacun un alkyle linéaire ou ramifié contenant de 1 à 4 atomes de carbone, et $R^4$ représente l'hydrogène, un halogène ou un alkyle linéaire ou ramifié contenant de 1 à 4 atomes de carbone, avec la condition qu'au moins un des deux symboles R et $R^1$ représente un radical de formule II.

2. Composés de formule I selon la revendication 1 dans lesquels R et $R^1$ ont les significations indiquées à la revendications 1 avec la condition qu'un des symboles R et $R^1$ représente un radical de formule II.

3. Composés selon la revendication 1 dans lesquels R représente un radical de formule II et $R^1$ l'hydrogène.

4. Composés selon la revendication 1 dans lesquels $R^1$ représente l'hydrogène et R un radical de formule II dans lequel $R^2$ et $R^3$ représentent chacun un méthyle et $R^4$ représente l'hydrogène ou un alkyle en $C_1$—$C_4$.

5. Composés selon la revendication 4 dans lesquels $R^4$ représente l'hydrogène ou un méthyle.

6. Composés selon la revendication 1 dans lesquels $R^4$ se trouve en position para relativement ou radical —$CR^2R^3$.

7. Cumyl-4-nitro-2-aniline selon la revendication 1.

8. Procédé pour préparer des composés de formule I selon la revendication 1, procédé caractérisé en ce qu'on fait réagir 1 mol d'une ortho-nitraniline répondant à la formule III:

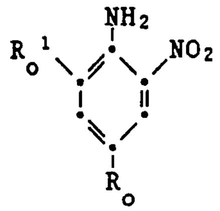

(III),

dans laquelle $R_0$ et $R_0^1$ représentent soit chacun un atome d'hydrogène, soit l'un des deux un atome d'hydrogène et l'autre un radical alkyle en $C_1$—$C_8$, linéaire ou ramifié, ou un halogène, avec au plus 1 mol ou au moins 2 mol d'un agent d'aralkylation capable d'introduire dans le noyau benzénique contenu dans la formule III, en position ortho et/ou para relativement au radical amino, un radical répondant à la formule II qui a été définie à la revendication 1.

## Claims

1. A compound of the formula I

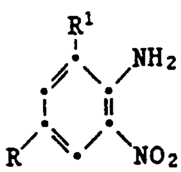

(I),

in which

R and $R^1$ each independently of the other are H, halogen, a straight-chain or branched alkyl having 1 to 8 carbon atoms or a radical of the formula II

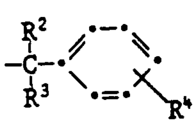

(II),

in which $R^2$ and $R^3$ are the same or different and each is straight-chain or branched alkyl having 1 to 4 carbon atoms and $R^4$ is H, halogen or straight-chain or branched alkyl having 1 to 4 carbon atoms, provided that at least one of the two symbols R and $R^1$ is a radical of the formula II.

2. A compound of the formula I according to claim 1 in which R and $R^1$ are as defined in claim 1, provided that one of R and $R^1$ is a radical of the formula II.

3. A compound according to claim 1 in which R is a radical of the formula II and $R^1$ is hydrogen.

4. A compound according to claim 1 in which $R^1$ is H and R is a radical of the formula II in which $R^2$ and $R^3$ are methyl, and $R^4$ is H or $C_1$—$C_4$alkyl.

5. A compound according to claim 4 in which $R^4$ is H or methyl.

6. A compound according to claim 1 in which $R^4$ is in para-position to the —$CR^2R^3$-group.

7. 4-Cumyl-2-nitroaniline according to claim 1.

8. A process for the production of compounds of the formula I according to claim 1, which comprises reacting 1 mole of the ortho-nitroaniline of the formula III

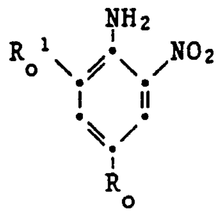

(III),

in which $R_o$ and $R_o^1$ are either both hydrogen or one of the two is hydrogen and the other is straight-chain or branched $C_1$—$C_8$alkyl or halogen, with up to one mole or at least two moles of an aralkylating agent capable of introducing a radical of the formula II defined in claim 1 into the benzene ring in the formula III in the ortho- and/or para-position to the amino group.